# EUROPÄISCHE PATENTSCHRIFT

(11) **EP 3 888 232 B1**
(45) Veröffentlichungstag und Bekanntmachung des Hinweises auf die Patenterteilung: **07.08.2024**
(21) Anmeldenummer: 19801846.7
(22) Anmeldetag: 11.11.2019
(51) Int. Cl.: H02K 15/00

(54) **ABDECKUNG UND VORRICHTUNG ZUM ZEITGLEICHEN AUSRICHTEN UND MASKIEREN VON HAIRPINS EINES STATORS ZUR VORBEREITUNG EINES SCHWEISSVORGANGS UND VERFAHREN ZUM VERBINDEN VON OBEREN ENDEN VON HAIRPINS EINES STATORS**
COVERING AND DEVICE FOR SIMULTANEOUSLY ALIGNING AND MASKING HAIRPINS OF A STATOR FOR PREPARING A WELDING OPERATION, AND METHOD FOR CONNECTING UPPER ENDS OF HAIRPINS OF A STATOR
CAPOT ET DISPOSITIF D'ORIENTATION ET DE MASQUAGE SIMULTANÉS DE STRUCTURES EN ÉPINGLE À CHEVEUX D'UN STATOR POUR PRÉPARER UN PROCESSUS DE SOUDAGE ET PROCÉDÉ DE LIAISON D'EXTRÉMITÉS SUPÉRIEURES DE STRUCTURES EN ÉPINGLE À CHEVEUX D'UN STATOR

(30) Priorität: 16.11.2018 DE 102018128920
(43) Veröffentlichungstag der Anmeldung: 06.10.2021
(73) Patentinhaber: Gehring Technologies GmbH + Co. KG, 73760 Ostfildern (DE)
(72) Erfinder: BAPP, Jaro, 71272 Renningen (DE); FREITAG, Martin, 72622 Nürtingen (DE); GUENTHER, Luis, 70597 Stuttgart (DE); WIENS, Andreas, 74343 Sachsenheim (DE); BEY, Oliver, 73760 Ostfildern (DE); LOHSE, Wolfram, 73207 Plochingen (DE)
(74) Vertreter: DREISS Patentanwälte PartG mbB
(86) Internationale Anmeldenummer: PCT/EP2019/080777
(87) Internationale Veröffentlichungsnummer: WO 2020/099282

(56) Entgegenhaltungen:
- WO-A1-2018/092528
- US-A1- 2014 225 465
- US-B1- 8 443 509

## Beschreibung

Die Erfindung betrifft eine Abdeckung zum zeitgleichen Ausrichten und Maskieren von Hairpins eines Stators zur Vorbereitung eines Schweißvorgangs, durch welchen obere Enden der Hairpins verbunden werden, sowie eine Vorrichtung umfassend eine solche Abdeckung. Zudem ist Gegenstand der Erfindung ein Verfahren zum Verbinden von oberen Enden von Hairpins eines Stators, welches unter Verwendung einer erfindungsgemäßen Abdeckung durchgeführt wird, und ein Stator, hergestellt nach einem solchen Verfahren. Des Weiteren ist Gegenstand der Erfindung ein System, umfassend einen Stator und eine erfindungsgemäße Abdeckung.

Verfahren und Vorrichtungen zur Herstellung von Statoren sind im Stand der Technik bekannt. Verwendung finden Statoren in elektrodynamischen Maschinen, z. B. in Elektromotoren.

Bei der Fertigung von Elektromechanischen Wandlern, insbesondere Elektromotoren, insbesondere für Traktionsantriebe, werden einzelne Wicklungselemente (Steckspulen, sog. "Hairpins") hergestellt, die im weiteren Prozess zu einer Statorwicklung weiterverarbeitet werden.

Um bedingt durch höheren Füllungsgrad eine höhere Effizienz von Elektromaschinen zu erreichen, wurde in der Hairpin-Technologie von runden auf rechteckige Leiterquerschnitte übergegangen. Im Rahmen der Erfindung ist die Verwendung von beliebigen Leiterquerschnitten möglich, also bspw. runde oder rechteckige Querschnitte. Im Rahmen der Herstellung der Wicklungselemente werden aus Endlosmaterial entsprechende Leiterstücke abgetrennt und zu geeigneten Wicklungselementen umgeformt. Anschließend werden die Wicklungselemente nach einer Positionierung am Stator an Ihren oberen Enden miteinander verschweißt.

Um dieses Verschweißen sicher und reproduzierbar zu gestalten, müssen miteinander zu verschweißende Hairpins in einer genau definierten Position zueinander positioniert werden, um deren gewünschten Kontakt miteinander sicherzustellen. Des Weiteren ist es gewünscht, den Bereich um die miteinander zu verschweißenden Hairpinenden herum abzudecken bzw. zu maskieren, um zu verhindern, dass Schweißperlen oder beim Schweißvorgang entstehendes Abfallmaterial die übrigen Abschnitte der Hairpins kontaktiert und möglicherweise beschädigt. Bei der Hairpin-Technologie liegen zwei Leiterelemente einstückig als U-förmiger Draht vor, ähnlich einer klassischen Haarnadel (engl. hairpin).

Bei der üblicherweise vorgesehenen Zweischichtwicklung werden die Enden zweier einzelner Leiterelemente, nachfolgend zwei Leiterelementenden genannt, beziehungsweise zwei Enden zweier unterschiedlicher Hairpins, im Folgenden zwei Enden eines Hairpin-Paares genannt, zusammengeschweißt. Zuvor werden die beiden zu verschweißenden Leiterelementenden beziehungsweise Enden eines Hairpin-Paares abisoliert und mit Hilfe einer Spannvorrichtung zueinander positioniert. Die relative Positionierung erfolgt entsprechend ihrer nach der Schweißoperation, d. h. im fertiggestellten Stator, gewünschten relativen Anordnung. Üblicherweise ist zudem eine Maskiervorrichtung vorgesehen. Durch diese soll vermieden werden, dass durch Schweißfunken oder heiße Metallteilchen, die während des Schweißvorgangs anfallen, der Stator oder die Isolation der Leiter beschädigt und/oder dessen Funktionalität zerstört wird.

Im Stand der Technik sind zahlreiche Vorrichtungen und Verfahren zum Ausrichten und Maskieren der Leiterelemente bzw. Hairpins von Statoren vor einem Schweißvorgang bekannt. Nachfolgend werden nur vorbekannte Vorrichtungen und Verfahren für Statoren beschrieben, die nach der Hairpin-Technologie gefertigt sind.

Beispielsweise werden einzelne Statorsegmente innerhalb eines Schweißrings der Reihe nach verspannt und maskiert. Dazu werden unter anderem Spannstifte eingesetzt, welche radial in das jeweilige Statorsegment eingefahren werden und die Enden der einzelnen Hairpin-Paare zueinander positionieren. Ergänzend dazu weist ein flächig ausgebildetes Maskierblech, das über dem nicht in Bearbeitung befindlichen Teil des Stators angeordnet ist, eine in z-Richtung orientierte Anschlagfläche für die zu spannenden Hairpin-Paare auf. Nachteilig an dieser Vorgehensweise ist die geringe Anzahl der in ein- und derselben Geräteeinstellung bearbeitbaren Hairpin-Paare. Zudem ist diese Methode nicht für Statoren mit mehreren Schweißringen anwendbar.

Alternativ sind eine Vollspannung und eine Vollmaskierung möglich. Dazu werden in einer Variante die zu verschweißenden Enden der Hairpin-Paare in zwei, jeweils mit Durchgängen versehene und übereinander angeordnete Deckbleche aufgenommen. Anschließend erfolgt die tangentiale und radiale Ausrichtung der Enden der Hairpin-Paare, indem die Deckbleche gegeneinander verdreht werden. In der Endposition kontaktieren die Innenseiten der Durchgänge die Enden der Hairpin-Paare in Umfangsrichtung.

Eine andere bekannte Ausführung der Vollspannung und Vollmaskierung sieht Blechstreifen mit Durchgängen für die zu verschweißenden Enden der Hairpin-Paare vor. Es wird jeweils eine radiale Reihe an Hairpin-Paaren in die Durchgänge zweier übereinander angeordneter Streifen aufgenommen. Dann werden die Bleche radial gegeneinander verschoben. Dieser Aufbau ist sehr aufwändig, insbesondere bezüglich Wartung und Reparatur.

Nachteilig an diesen beiden Methoden der Vollspannung und Vollmaskierung ist insbesondere das Risiko, dass beim Schweißen anfallende Metallteilchen den Verdrehmechanismus blockieren können. Zudem sind je nach Querschnittsgeometrie der zu verschweißenden Hairpins Öffnungen in der jeweiligen Maskierung erforderlich.

Die Druckschrift US 8 443 509 B1 zeigt ein Verfahren, das Schritte aufweist, in denen stabgewickelte Statorleiter vorbereitet werden, um elektrisch miteinander verbunden zu werden. Dabei können die Statorleiter über eine Ringbefestigung stabilisiert werden. Ferner zeigt die US 8 443 509 B1 eine entsprechende Vorrichtung. Die Druckschrift weist Merkmale des Oberbegriffs des Anspruchs 1 auf.

US 2014/0225465 A1 zeigt eine elektrische Drehmaschine umfassend einen Stator und eine Spule. Die Leiterenden der Spule sind miteinander vertwisted und verschweißt. Die Leiterenden werden über eine Schweißschablone vor dem Verschweißen aufeinander ausgerichtet.

Insgesamt sind die im Stand der Technik beschriebenen Vorrichtungen und Verfahren als relativ komplex, arbeits- und kostenintensiv und störungsanfällig zu bewerten. Außerdem zeigen sie Einschränkungen hinsichtlich der Querschnittsgeometrien der Hairpins, der Anzahl der zeitgleich ausrichtbaren und/oder verschweißbaren Hairpin-Paare und/oder der Anzahl der bearbeitbaren Schweißringe. Insgesamt sind die bekannten Methoden unter ökonomischen Gesichtspunkten als unbefriedigend einzustufen.

Der Erfindung liegt daher die Aufgabe zugrunde, diese und weitere Nachteile des Standes der Technik zu überwinden und eine Vorrichtung sowie ein Verfahren zur Verfügung zu stellen, mit denen der Schweißvorgang bei der Herstellung eines Stators, umfassend Hairpins, einfach, kostengünstig, zuverlässig und reproduzierbar vorbereitet und durchgeführt werden kann. Zudem sollen die Vorrichtung und das Verfahren unabhängig vom Aufbau des Stators, z. B. der Anzahl der Schweißringe und der Geometrie der Hairpins, einsetzbar sein.

Hauptmerkmale der Erfindung sind in Anspruch 1, Anspruch 13, Anspruch 14, oder Anspruch 17 angegeben. Ausgestaltungen sind Gegenstand der Ansprüche 2 bis 12 oder 15 und 16. Alle Beispiele und Ausführungsformen der folgenden Beschreibung beziehen sich auf die vorliegende Erfindung.

Gelöst wird die Aufgabe durch eine Abdeckung zum zeitgleichen Ausrichten und Maskieren von Hairpins eines Stators zur Vorbereitung eines Schweißvorgangs, durch welchen obere Enden der Hairpins verbunden werden. Dabei weisen die Hairpins zwei Schenkel auf, und die Schenkel einen oberen Abschnitt, welcher abisoliert ist und ein oberes Ende aufweist. Jeweils zwei obere Abschnitte von Schenkeln verschiedener Hairpins sind paarweise angeordnet. Die erfindungsgemäße Abdeckung umfasst
i) eine, insbesondere kreisförmige, Fläche mit einer Oberseite und einer Unterseite,
ii) Ausnehmungen,
   - in welche jeweils eine Anordnung, umfassend die paarweise angeordneten oberen Abschnitte zweier Hairpins, aufnehmbar ist
      und
   - welche in einer Umfangsrichtung der Fläche auf konzentrischen Kreisbahnen oder Abschnitten von konzentrischen Kreisbahnen und in radial verlaufenden Reihen nebeneinander angeordnet angeordnet sind,
      wobei
   - in der Umfangsrichtung nebeneinander angeordnete Ausnehmungen durch einen Abschnitt eines in einer Radialrichtung verlaufenden Radialstegs beabstandet sind,
   - in der Radialrichtung nebeneinander angeordnete Ausnehmungen durch einen Abschnitt eines zwischen den konzentrischen Kreisbahnen verlaufenden Ringstegs beabstandet sind,
      und
   - eine relative Anordnung der Ausnehmungen einer relativen Endpositionierung entspricht, welche für die paarweise angeordneten oberen Abschnitte zweier Hairpins vorgesehen ist,
      und
iii) Mittel zum Ausrichten und Spannen der paarweise angeordneten oberen Abschnitte zweier Hairpins,
   wobei
   - die Mittel auf der Unterseite der Fläche in der Radialrichtung angeordnet sind,
   - jedes Mittel ein der Unterseite der Fläche zugewandtes erstes Endes und ein von der Unterseite der Fläche abgewandtes zweites Endes aufweist, wobei jedes Mittel zum zweiten Ende hin verjüngt ist,
      und
   - das erste Ende jedes Mittels mit wenigstens einer der Ausnehmungen teilweise überlappt.

Dabei entspricht eine Anzahl der Ausnehmungen wenigstens einer Menge von Anordnungen, welche jeweils paarweise angeordnete
obere Abschnitte zweier Hairpins umfassen und miteinander zu verschweißen sind. Die Ausnehmungen erstrecken sich in Richtung einer Normalen von der Oberseite bis zur Unterseite der Fläche. Die Normale verläuft senkrecht zu zumindest einem Teil der Oberseite der Fläche.

Die Fläche, welche die Abdeckung umfasst, ist vorzugsweise kreisförmig ausgestaltet. Alternativ kann sie als Vieleck ausgestaltet sein, z. B. als Quadrat oder Rechteck. Die Abdeckung kann auch derart ausgebildet sein, dass sie lediglich einen Teilbereich der Kreisförmig angeordneten Hairpins erfassen soll. Beispielsweise kann die Abdeckung zur Maskierung von einen Halbkreisförmigen Teil der Hairpins ausgebildet sein.

Die beanspruchte Abdeckung ist vorteilhafterweise einteilig ausgebildet. Daher sind sowohl ihre Herstellung als auch ihre Anwendung besonders einfach und kostengünstig. Die Abdeckung kann mittels 3D-Druck hergestellt sein, insbesondere unter Verwendung metallischer Werkstoffe. Darüber hinaus ermöglicht der relativ simple Aufbau der Abdeckung eine einfache, zuverlässige und reproduzierbare Vorbereitung und Durchführung der Schweißoperation, welche zum Verbinden der Enden der Hairpin-Paare erforderlich ist. So wird die Abdeckung lediglich in einer Normalenrichtung bewegt, damit die Anordnungen, umfassend die paarweise angeordneten oberen Abschnitte zweier Hairpins, in die Ausnehmungen aufgenommen werden. Die Normalenrichtung verläuft parallel zu der Longitudinalachse des jeweils abzudeckenden und/oder zu bearbeitenden Stators. Diese Bewegung ist z. B. mittels eines einfachen Linearantriebs realisierbar. Mithin wird beispielsweise auf ein aufwändiges und störungsanfälliges Verdrehen mehrerer Bauteile gegeneinander verzichtet. Dadurch werden nicht nur Betriebskosten, sondern auch Wartungs- und Reparaturkosten niedrig gehalten.

Ausrichten, Spannen und Maskieren der Hairpins erfolgen zeitgleich in einem Schritt. Zum Ausrichten und Spannen sind Mittel auf der Unterseite der Fläche in der Radialrichtung angeordnet. Die zum zweiten Ende hin verjüngten Mittel fungieren zunächst als Einführhilfen für die oberen Abschnitte der Hairpins in die Ausnehmungen. Vorteilhaft ist dabei, dass die Hairpins weder irreversibel verformt noch ihre Oberflächen oder ihre Isolierungen beschädigt werden. Zudem werden gegebenenfalls vorhandene Positionierungsabweichungen innerhalb der gesamten Hairpin-Anordnung des Stators auf besonders einfache und materialschonende Weise ausgeglichen. Eine Enposition der Mittel, bspw. über einen Anschlag erfolgt vorteilhafterweise oberhalb der Biegestellen der Hairpins. Dadurch, dass das erste Ende jedes Mittels mit wenigstens einer der Ausnehmungen teilweise überlappt, wird ein selbsttätiges Ausrichten, d. h. Zentrieren, und Spannen der Hairpin-Paare innerhalb der Ausnehmungen auf einfache, kostengünstige, zuverlässige und reproduzierbare Weise erreicht. Eine externe Spannstation oder ein Dornwechsler sind nicht erforderlich.

Aufgrund der zahlreichen Gestaltungsmöglichkeiten in Bezug auf das Material der Abdeckung, Form der Fläche sowie Anzahl, Form, Abmessungen und Anordnung der Ausnehmungen und Mittel ist die erfindungsgemäße Abdeckung vielfältig abwandelbar und einsetzbar. Insbesondere ist eine Anpassung an den Aufbau einer Vielzahl von Statoren, welche unterschiedliche Anzahlen von Schweißringen und/oder Querschnittsgeometrien der Hairpins aufweisen, einfach und kostengünstig durch Austausch der Abdeckung durchführbar.

Die Ausnehmungen sind vorteilhafterweise rechteckig ausgebildet und in den jeweiligen Ecken der Ausnehmungen sind die Mittel zum Ausrichten und Spannen angeordnet. Die Anordnung ist vorzugsweise derart, dass die Mittel die Ecken der Rechtecke (der Ausnehmungen) überdecken. Die Mittel erstrecken sich also sowohl auf der Schmalseite als auch auf der orthogonal zu dieser angeordneten Längsseite.

Vorzugsweise sind die Mittel auf den Kreuzungsstellen der Radialstege und der Ringstege angeordnet. Vorzugsweise ist die Fläche der ersten Enden der Mittel größer als die Fläche der Kreuzungsstellen.

Vorzugsweise ist die Erstreckung der ersten Enden der Mittel in Umfangsrichtung größer als die Breite der Radialstege (in Umfangsrichtung) an der Position des jeweiligen Mittels.

Vorzugsweise ist die Erstreckung der ersten Enden der Mittel in radialer Richtung größer als die Breite der Ringstege (in radialer Richtung) an der Position des jeweiligen Mittels.

Vorzugsweise überdecken die ersten Enden der Mittel die Kreuzungsstellen der Radialstege und der Ringstege (bei Betrachtung der Abdeckung von der Unterseite der Fläche her) .

Dies kann sich jeweils auf einige der Mittel und Ausnehmungen bzw. Radialstege und Ringstege beziehen.

Vorzugsweise überdecken die ersten Enden wenigstens einiger Mittel alle vier Ecken wenigstens einiger der rechteckigen Ausnehmungen.

Insgesamt werden mit der beanspruchten Abdeckung eine selbsttätige Zentrierung und eine formschlüssige Spanngenauigkeit erzielt. Zugleich erfolgt eine Maskierung der Hairpin-Paare. Dadurch wird vermieden bzw. verhindert, dass der Stator durch gegebenenfalls während der Schweißoperation anfallende Funken und/oder Metallteilchen beschädigt und damit unbrauchbar wird. Insbesondere werden Beschädigungen des Blechpakets, des Isolationsmaterials und der mechanischen Komponenten vermieden bzw. verhindert. Unter Anwendung der beanspruchten Abdeckung erfolgt das Verschweißen der oberen Enden der Hairpin-Paare einfach, kostengünstig, zuverlässig und reproduzierbar, auch im industriellen Maßstab.

In einer Ausführungsform der beanspruchten Abdeckung sind die auf einer Kreisbahn angeordneten Ausnehmungen in der Umfangsrichtung und/oder die Ausnehmungen zweier benachbarter Kreisbahnen in der Radialrichtung äquidistant zueinander angeordnet. Dadurch sind Herstellung und Anwendung der Abdeckung ganz besonders einfach realisierbar. Der äquidistant gewählte Abstand der Ausnehmungen in der Umfangsrichtung kann größer sein als der äquidistant gewählte Abstand der Ausnehmungen in der Radialrichtung, und umgekehrt.

Eine weitere Variante der beanspruchten Abdeckung sieht vor, dass ein erster Umfang einer Innenseite jeder Ausnehmung größer ist als ein zweiter Umfang einer Außenseite einer Anordnung, umfassend die paarweise angeordneten oberen Abschnitte zweier Hairpins. Dadurch wird vereinfacht, dass die Anordnungen nach Durchführung des Schweißvorgangs problemlos, d. h. ohne ein Verklemmen oder Verkanten, aus den Ausnehmungen entfernt werden können. Denn die Schweißnaht oder Schweißperle, durch welche die oberen Enden eines Hairpin-Paars verbunden sind, ragt naturgemäß etwas über die Außenseite der Anordnung, umfassend die paarweise angeordneten und verschweißten oberen Abschnitte zweier Hairpins hinaus. Daher ist ein umlaufender Spalt vorgesehen (der Spalt läuft bis zu den Kontaktpunkten den Hauirpins mit den Mitteln) zwischen der Innenseite jeder Ausnehmung und der Außenseite einer Anordnung, umfassend die paarweise angeordneten oberen Abschnitte zweier Hairpins. Die Breite des umlaufenden Spaltes beträgt üblicherweise ≤ 0,8 mm.

In einer anderen Ausführungsform der beanspruchten Abdeckung ist der Radialsteg und/oder der Ringsteg einstückig ausgebildet. Das ist hinsichtlich der Herstellung, Stabilität und Robustheit der Abdeckung besonders vorteilhaft. Alternativ weist der Radialsteg und/oder der Ringsteg - unter anderem in Abhängikgeit von der Anzahl der konzentrischen Kreisbahnen, auf welchen die Ausnehmungen angeordnet sind, - mehrere voneinander beabstandete Abschnitte auf. Dadurch können Materialkosten und/oder Gewicht der Abdeckung reduziert werden.

In einer anderen Variante der beanspruchten Abdeckung ist vorgesehen, dass die Mittel auf den in der Radialrichtung verlaufenden Radialstegen angeordnet sind. Eine solche Anordnung ist einfach zu realisieren und für die Stabilität und Anwendung der Abdeckung vorteilhaft. Insbesondere im Falle rechteckiger Ausnehmungen sind das Ausrichten, die selbsttägige Zentrierung, und das Spannen der paarweise angeordneten oberen Abschnitte zweier Hairpins auf einfache Weise realisierbar. Denn die Mittel zum Ausrichten und Spannen können auf den Radialstegen so angeordnet sein, dass alle vier Ecken der Ausnehmungen jeweils eine teilweise Überlappung mit dem ersten Ende eines der Mittel aufweisen. Die Ecken der Ausnehmungen können auch abgerundet sein.

In einer anderen Ausführungsform der Abdeckung ist vorgesehen, dass das erste Ende jedes Mittels mit wenigstens zwei Ausnehmungen teilweise überlappt. Das ist beispielsweise realisierbar, wenn die Abdeckung rechteckige Ausnehmungen umfasst und als Mittel zum Ausrichten und Spannen beispielsweise Kegelstümpfe oder Halbkugeln vorgesehen sind, welche auf den Radialstegen angeordnet sind. Die ersten Enden der Kegelstümpfe oder Halbkugeln können als kreisförmige Flächen oder ringförmig ausgebildet sein.

Eine weitere Ausführungsform der beanspruchten Abdeckung sieht vor, dass eine Oberfläche des ersten Endes jedes Mittels mit der Unterseite der Fläche stoffschlüssig verbunden ist. Die Herstellung der Abdeckung kann bspw. in mehreren Schritten erfolgen. Zunächst werden die Fläche der Abdeckung und die Mittel gefertigt. Danach wird jedes Mittel mit der Oberfläche des ersten Endes auf der Unterseite der Fläche wunschgemäß angeordnet, gefolgt von einem stoffschlüssigen Verbinden der Oberfläche des ersten Endes jedes Mittels mit der Unterseite der Fläche. Dies hat den Vorteil, dass die Fertigung der Abdeckung nach Bedarf individuell erfolgen kann. Die stoffschlüssige Verbindung kann - je nach Art der für Fläche und Mittel gewählten Materialien - z. B. durch einen Spezialkleber oder eine Schweißoperation erfolgen. Die Herstellung der Abdeckung kann jedoch auch in einem einzigen Schritt erfolgen. Dazu kann z. B. ein Spritzgussverfahren oder ein 3D-Drucker verwendet werden. Somit kann der Herstellungsmodus für die Abdeckung vorteilhafterweise je nach gewünschter Anwendung gewählt werden.

In einer anderen Variante der beanspruchten Abdeckung weist wenigstens ein, vorzugsweise mehrere, insbesondere jedes Mittel eine Kontur auf, welche von einer Pyramide, einem Kegel und/oder einer Kugel ableitbar ist. Der Begriff "ableitbar" bedeutet in diesem Zusammenhang, dass zur Ausgestaltung der Kontur von wenigstens einem geometrischen Körper, ausgewählt aus der Gruppe bestehend aus einer Pyramide, einem Kegel und einer Kugel, ausgegangen wird. Die "Ableitung" erfolgt durch eine Abwandlung des wenigstens einen geometrischen Körpers, insbesondere eine Kappung eines oberen Endes oder eine Teilung. Die Abwandlung erfolgt jeweils entsprechend den Anforderungen, welche im Zusammenhang mit der jeweils zu fertigenden Abdeckung gestellt werden. Besonders einfach und damit vorteilhaft ist es, wenn wenigstens ein, vorzugsweise mehrere, insbesondere jedes Mittel ein vierseitiger Pyramidenstumpf, ein sechsseitiger Pyramidenstumpf, ein Kegelstumpf oder eine Halbkugel ist.

Die Mittel können unabhängig von ihrer Kontur jeweils als massiver Körper oder als Hohlkörper ausgebildet sein. Somit kann die Oberfläche des ersten Endes eines Mittels beispielsweise als eine kreisförmige oder eine vieleckige Fläche oder als ein kreisförmiger oder ein eckiger Ring ausgebildet sein.

Eine andere Ausführungsform der beanspruchten Abdeckung sieht vor, dass sie unter Verwendung eines metallischen Materials und/oder eines keramischen Materials hergestellt ist. Je nach Anwendung der Abdeckung und Kostenrahmen für ihre Herstellung ist die Zusammensetzung ihres Materials aus einem relativ breiten Spektrum metallischer und keramischer Materialien wählbar. Vergleichsweise kostengünstig ist die Fertigung aus einem Blechstahl, insbesondere aus einem handelsüblichen.

Die Oberfläche der Mittel kann reibungsmindernd ausgebildet, insbesondere beschichtet, sein. Die Oberfläche der Mittel kann gehärtet ausgebildet sein, oder eine gegenüber dem Vollmaterial härtere Beschichtung aufweisen.

In einer weiteren Variante der beanspruchten Abdeckung ist sie unter Verwendung eines 3D-Druckverfahrens oder eines Spritzgussverfahrens hergestellt. Diese Art der Herstellung ist besonders rasch und präzise. Bei dem Spritzgussverfahren handelt es sich z. B. um ein Keramikpulverspritzgussverfahren oder ein Metallpulverspritzgussverfahren.

Die Aufgabe wird außerdem gelöst durch eine Vorrichtung zum zeitgleichen Ausrichten und Maskieren von Hairpins eines Stators zur Vorbereitung eines Schweißvorgangs, durch welchen obere Enden der Hairpins verbunden werden. Dabei weist jeder Hairpin einen ersten Schenkel und einen zweiten Schenkel auf,
wobei jeder Schenkel einen oberen Abschnitt aufweist, welcher abisoliert ist und ein oberes Ende aufweist. Zudem sind jeweils der obere Abschnitt des ersten Schenkels eines ersten Hairpins und der obere Abschnitt des zweiten Schenkels eines zweiten Hairpins paarweise angeordnet. Die beanspruchte Vorrichtung umfasst eine Abdeckung gemäß einer der oben beschriebenen Ausführungsformen und einen Antrieb zum Bewegen der Abdeckung in einer Normalenrichtung.

Die Normalenrichtung verläuft parallel zu einer Longitudinalachse des jeweils abzudeckenden und/oder zu bearbeitenden Stators.

Mit der erfindungsgemäßen Vorrichtung lässt sich das Verschweißen der oberen Enden der Hairpins eines Stators auf einfache, kostengünstige, zuverlässige und reproduzierbare Weise vorbereiten und durchführen. Zudem ist die beanspruchte Vorrichtung besonders einfach und kostengünstig herstellbar und verwendbar. Insbesondere sind ihre wesentlichen Komponenten, die weiter oben beschriebene Abdeckung und ihre Ausführungsformen sowie der Antrieb zum vertikalen Auf- und Abwärtsbewegen der Abdeckung, einfach und kostengünstig herstellbar und verwendbar. Eine Abwandlung und/oder ein Austauschen der Abdeckung sind bei Bedarf, d. h. je nach Stator- und Hairpin-Geometrie, einfach, schnell und kostengünstig möglich. Mit der beanspruchten Vorrichtung ist eine Vielzahl von Statoren bearbeitbar, und zwar unabhängig von der Anzahl der Schweißringe und der Querschnittsgeometrie der Hairpins. Möglich sind zum Beispiel Hairpins mit einem rechteckigen, quadratischen, dreieckigen oder runden Querschnitt. Auch der Antrieb ist einfach austauschbar oder erweiterbar. Damit ist die Vorrichtung vorteilhafterweise vielfältig abwandelbar und einsetzbar, auch für die industrielle Produktion.

In einer Ausführungsform der Vorrichtung umfasst der Antrieb einen Linearantrieb. Bei dem Linearantrieb handelt es sich beispielsweise um einen Direktantrieb, einen Spindelantrieb oder einen Zahnriemenantrieb. Der Linearantrieb weist eine hohe Präzision, d. h. Wiederholgenauigkeit, auf. Eine Toleranz des Linearantriebs beträgt bevorzugt ± 0,04 mm, besonders bevorzugt ± 0,003 mm.

Weiterhin wird die Aufgabe gelöst durch ein Verfahren zum Verbinden von oberen Enden von Hairpins eines Stators unter Verwendung eines Schweißvorgangs. Dabei weist jeder Hairpin einen ersten Schenkel und einen zweiten Schenkel auf, wobei jeder Schenkel einen oberen Abschnitt aufweist, welcher abisoliert ist und ein oberes Ende aufweist. Außerdem sind jeweils der obere Abschnitt des ersten Schenkels eines ersten Hairpins und der obere Abschnitt des zweiten Schenkels eines zweiten Hairpins paarweise angeordnet. Das beanspruchte Verfahren umfasst die Schritte:
i) zeitgleiches Ausrichten und Maskieren von Anordnungen, welche jeweils paarweise angeordnete obere Abschnitte zweier Hairpins umfassen,
   unter Verwendung einer Abdeckung gemäß einer der oben beschriebenen Ausführungsformen,
   wobei in einer Normalenrichtung eine Absenkung der Abdeckung erfolgt, bis zumindest obere Enden der paarweise angeordneten oberen Abschnitte der Hairpins in Ausnehmungen der Abdeckung aufgenommen sind,
ii) Durchführen des Schweißvorgangs,
   und
iii) Entfernen der Abdeckung in einer zu der Normalenrichtung entgegengesetzten Richtung.

Für den Schweißvorgang können diverse Schweißmethoden eingesetzt werden, wie z. B. Wolfram-Inertgasschweißen (engl. Tungsten Inertgas Welding, TIG) und Punktschweißen.

Die Normalenrichtung verläuft parallel zu einer Longitudinalachse des jeweils abzudeckenden und/oder zu bearbeitenden Stators.

Bei dem beanspruchten Verfahren erfolgen Ausrichten, Spannen und Maskieren der Hairpins erfolgen zeitgleich in einem Schritt. Zum Ausrichten und Spannen sind Mittel auf einer Unterseite der Abdeckung in einer Radialrichtung angeordnet. Die zu einem zweiten Ende hin verjüngten Mittel fungieren zunächst als Einführhilfen für die oberen Abschnitte der Hairpins in Ausnehmungen der Abdeckung. Vorteilhaft ist dabei, dass die Hairpins weder irreversibel verformt noch ihre Oberflächen oder ihre Isolierungen beschädigt werden. Zudem werden gegebenenfalls vorhandene Abweichungen innerhalb der gesamten Hairpin-Anordnung des Stators auf besonders einfache und materialschonende Weise ausgeglichen. Ein Anschlag der Mittel erfolgt vorteilhafterweise oberhalb der Biegestellen der Hairpins.

Das Verfahren ist aufgrund der geringen Anzahl und des vergleichsweise einfachen Aufbaus der erforderlichen Komponenten sowie der geringen Anzahl und relativ einfachen Durchführbarkeit der Verfahrensschritte besonders robust und wenig störungsanfällig. Die wesentlichen für das Verfahren notwendigen Komponenten, die weiter oben beschriebene Abdeckung und ihre Ausführungsformen sowie der Antrieb zum vertikalen Auf- und Abwärtsbewegen der Abdeckung, sind einfach und kostengünstig herstellbar und verwendbar. Eine Abwandlung und/oder ein Austauschen der Abdeckung sind bei Bedarf, d. h. je nach Stator- und Hairpin-Geometrie, einfach, schnell und kostengünstig möglich. Mit dem beanspruchten Verfahren ist eine Vielzahl von Statoren bearbeitbar, welche sich in der Anzahl der Schweißringe und/oder der Querschnittsgeometrie der Hairpins unterscheiden können. Möglich sind zum Beispiel Hairpins mit einem rechteckigen, quadratischen, dreieckigen oder runden Querschnitt. Auch der Antrieb ist einfach austauschbar oder erweiterbar. Damit ist die Vorrichtung vorteilhafterweise vielfältig abwandelbar und einsetzbar.

Mit dem beanspruchten Verfahren erfolgen Vorbereitung und Durchführung des Verschweißens der oberen Enden der Hairpins eines Stators auf einfache, kostengünstige, zuverlässige und reproduzierbare Weise. Insbesondere werden eine selbsttätige Zentrierung und eine formschlüssige Spanngenauigkeit der Hairpin-Paare erzielt. Das Verfahren ist auch im industriellen Maßstab durchführbar.

In einer Ausführungsform des Verfahrens erfolgen die Absenkung und das Entfernen der Abdeckung mittels eines Antriebs, umfassend einen Linearantrieb. Bei dem Linearantrieb handelt es sich beispielsweise um einen Direktantrieb, einen Spindelantrieb oder einen Zahnriemenantrieb handeln. Der Linearantrieb weist eine hohe Präzision, d. h. Wiederholgenauigkeit, auf. Eine Toleranz des Linearantriebs beträgt bevorzugt ± 0,04 mm, besonders bevorzugt ± 0,003 mm.

Eine weitere Variante des Verfahrens sieht vor, dass das Ausrichten einen radialen Ausrichtungsschritt und einen tangentialen Ausrichtungsschritt umfasst. Dabei werden die beiden Ausrichtungsschritte zeitgleich durchgeführt. Der radiale Ausrichtungsschritt umfasst ein radiales Verziehen bzw. Spannen, d. h. in Radialrichtung. Der tangentiale Ausrichtungsschritt umfasst ein laterales Verziehen bzw. Spannen, d. h. in Umfangsrichtung. Nach dem Ausrichten sind eine Nullspaltebene, welche in Umfangsrichtung orientiert ist, und eine Ausrichtebene, welche in Radialrichtung orientiert ist, orthogonal zueinander angeordnet. Das erste Ende jedes Mittels überlappt teilweise mit wenigstens einer der Ausnehmungen. Dadurch werden das zeitgleiche, selbsttätige Ausrichten in radialer und tangentialer Richtung, d. h. ein selbsttätiges Zentrieren, und Spannen der Hairpin-Paare innerhalb der Ausnehmungen auf einfache, kostengünstige, zuverlässige und reproduzierbare Weise erreicht. Insbesondere wird vorteilhafterweise die Anzahl der Verfahrensschritte und damit die Störungsanfälligkeit reduziert. Das Verfahren ist folglich besonders einfach und rasch durchführbar.

In einer anderen Ausführungsform des Verfahrens erfolgt die Absenkung der Abdeckung, bis zumindest die oberen Enden der paarweise angeordneten oberen Abschnitte der Hairpins durch die Ausnehmungen der Abdeckung hindurchgeführt sind. Dies ist besonders vorteilhaft, weil das Verschweißen der oberen Enden der Hairpins des Stators besonders einfach und präzise durchführbar ist.

Außerdem wird die Aufgabe gelöst durch einen Stator, umfassend Hairpins. Dabei weist jeder Hairpin einen ersten Schenkel und einen zweiten Schenkel auf, wobei jeder Schenkel einen oberen Abschnitt aufweist, welcher abisoliert ist und ein oberes Ende aufweist. Weiterhin sind jeweils der obere Abschnitt des ersten Schenkels eines ersten Hairpins und der obere Abschnitt des zweiten Schenkels eines zweiten Hairpins paarweise angeordnet, wobei deren oberen Enden verschweißt sind. Der beanspruchte Stator ist hergestellt nach einem Verfahren gemäß einem der weiter oben beschriebenen Ausführungsbeispiele. Er zeichnet sich insbesondere durch seine hochpräzise Verarbeitung aus, insbesondere hinsichtlich der Ausrichtung der Anordnungen, umfassend die paarweise angeordneten oberen Abschnitte zweier Hairpins, deren obere Enden verschweißt sind. Er lässt sich besonders einfach, kostengünstig und reproduzierbar herstellen, d. h. auch im industriellen Maßstab.

Des Weiteren wird die Aufgabe gelöst durch ein System, umfassend einen Stator, der wiederum Hairpins umfasst. Die Hairpins weisen zwei Schenkel auf, und die Schenkel weisen einen oberen Abschnitt auf, welcher abisoliert ist und ein oberes Ende aufweist. Jeweils zwei obere Abschnitte von Schenkeln verschiedener Hairpins sind paarweise angeordnet. Das beanspruchte System umfasst zusätzlich zu dem Stator eine Abdeckung gemäß einem der weiter oben beschriebenen Ausführungsbeispiele. Dabei sind zumindest die oberen Enden der paarweise angeordneten oberen Abschnitte der Hairpins in Ausnehmungen der Abdeckung aufgenommen. Vorteilhafterweise ist die Ausgestaltung der Abdeckung an die Stator- und Hairpin-Geometrie angepasst. Das beanspruchte System ist transportabel, z. B. für den Fall, dass ein Verbinden der oberen Enden der Hairpins mittels eines Schweißvorgangs an anderer Stelle durchgeführt werden soll. Die Abdeckung dient somit nicht nur zum Ausrichten und Maskieren der Hairpins zur Vorbereitung des Schweißvorgangs, sondern auch als Transportsicherung.

Die Mittel der Abdeckung können zur Öffnung 12 hin auswärts gewölbt (konvex) ausgebildet sein. Die Mittel 18 können jedoch auch zur Öffnung 12 hin einwärts gewölbt (konkav) ausgebildet sein. Die Mittel 18 können auch derart ausgebildet sein, dass deren Kanten sich beim Blick auf die Oberseite 11a geradlinig erstreckt, also ohne eine Wölbung.

Im Sinne der Erfindung ist auch eine Abdeckung die lediglich einen Winkelbereich, bspw. 90°, der um 360° verlaufenden Ringe an Hairpins abdeckt.

Das Verfahren ist nicht auf Hairpin förmige Wickeldrähte beschränkt. Das erfindungsgemäße Verfahren kann auch ein Verfahren zum Verbinden von Enden von Wicklungsdrähten, die zwar Hairpins sein können jedoch nicht müssen, eines Stators unter Verwendung eines Schweißvorgangs,
wobei
die Wicklungsdrähte Schenkel aufweisen,
und die Schenkel einen oberen Abschnitt aufweisen, welcher abisoliert ist und ein oberes Ende aufweist,
   und
jeweils zwei obere Abschnitte von Schenkeln verschiedener Wicklungsdrähte paarweise angeordnet sind,
umfassend die Schritte:
   zeitgleiches Ausrichten und Maskieren von Anordnungen, welche jeweils paarweise angeordnete obere Abschnitte zweier Wicklungsdrähte umfassen,
   unter Verwendung einer Abdeckung gemäß einer der oben beschriebenen Ausführungsformen, wobei in einer Normalenrichtung eine Absenkung der Abdeckung erfolgt, bis zumindest obere Enden der paarweise angeordneten oberen Abschnitte der Wicklungsdrähte in Ausnehmungen der Abdeckung aufgenommen sind,
   Durchführen des Schweißvorgangs,
      und
   Entfernen der Abdeckung in einer zu der Normalenrichtung entgegengesetzten Richtung.

Die Wicklungsdrähte können bspw. Stiftartig ausgebildet sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 Einen Stator, umfassend ein Blechpaket und Hairpins in einer Gesamtanordnung;
Fig. 1a Eine Ausschnittsweise Vergrößerung der Gesamtanordnung der Hairpins aus Fig. 1;
Fig. 2 Einen Ausschnitt der Gesamtanordnung der Hairpins des Stators, aufgenommen in Ausnehmungen einer erfindungsgemäßen Abdeckung;
Fig. 2a Eine Ausschnittsweise Aufsicht auf eine Oberseite der erfindungsgemäßen Abdeckung, in deren Ausnehmungen Hairpins aufgenommen sind;
Fig. 2b Eine Ausschnittsweise Vergrößerung von Fig. 2a;
Fig. 3 Eine Ausschnittsweise perspektivische Ansicht einer Unterseite einer Ausführungsform der erfindungsgemäßen Abdeckung;
Fig. 3a Eine Ausschnittsweise Aufsicht auf die Ausführungsform aus Fig. 3;
Fig. 4 Eine Draufsicht auf 2 obere Enden einer Hairpin Anordnung;
Fig. 4a Eine Draufsicht auf die Anordnung aus Figur 4 im in einer Ausnehmung aufgenommenen Zustand; und
Fig. 4b Eine Darstellung entsprechend Figur 4a für eine alternative Abdeckung.

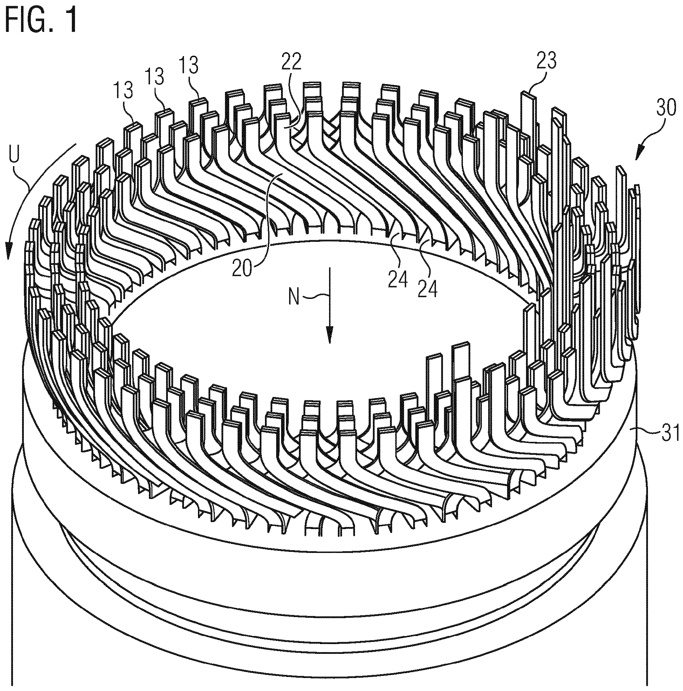

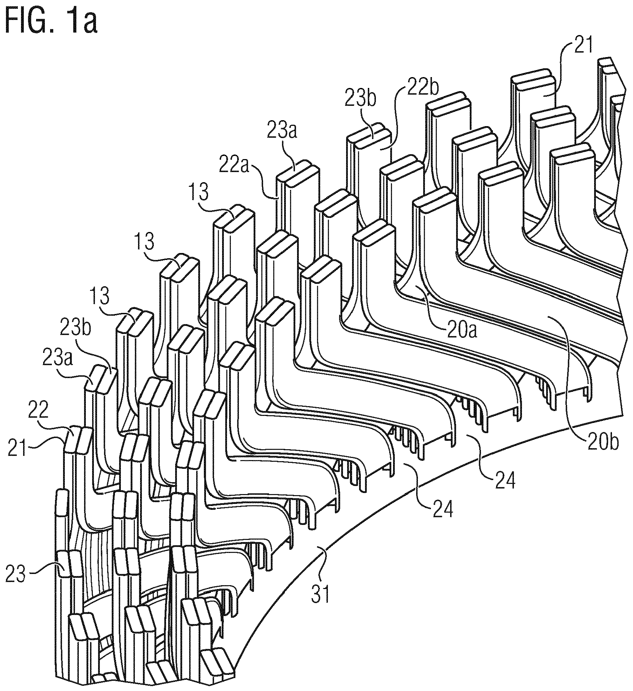

In Fig. 1 ist ein Stator 30 gezeigt, umfassend ein Blechpaket 31 und Hairpins 20 in einer Gesamtanordnung, wobei die Hairpins 20 eine rechteckige Querschnittsgeometrie aufweisen. Das Blechpaket 31 kann beispielsweise aus einem Blechstahl gefertigt sein, insbesondere einem handelsüblichen. Die Hairpins 20 sind mit einem unteren Ende 24 in umlaufende Nuten des Blechpakts 30 eingeführt, wobei die Nuten nicht gezeigt sind. Üblicherweise sind die Hairpins 20 aus Kupfer oder einem Kupfer enthaltenden Material gefertigt und bis auf einen oberen Abschnitt 22 mit einer Isolierschicht versehen.

Jeder Hairpin 20 weist Schenkel 21 auf, wobei jeder Schenkel 21, einen oberen Abschnitt 22 aufweist. Letzterer ist abisoliert und besitzt ein oberes Ende 23. Weiterhin sind jeweils der obere Abschnitte 22 von zwei Hairpins 20 paarweise angeordnet. In Fig. 1a ist eine ausschnittsweise Vergrößerung der Gesamtanordnung der Hairpins 20 aus Fig. 1 dargestellt. Anordnungen 13, umfassend die paarweise angeordneten oberen Abschnitte 22 zweier Hairpins 20 sind gut erkennbar.

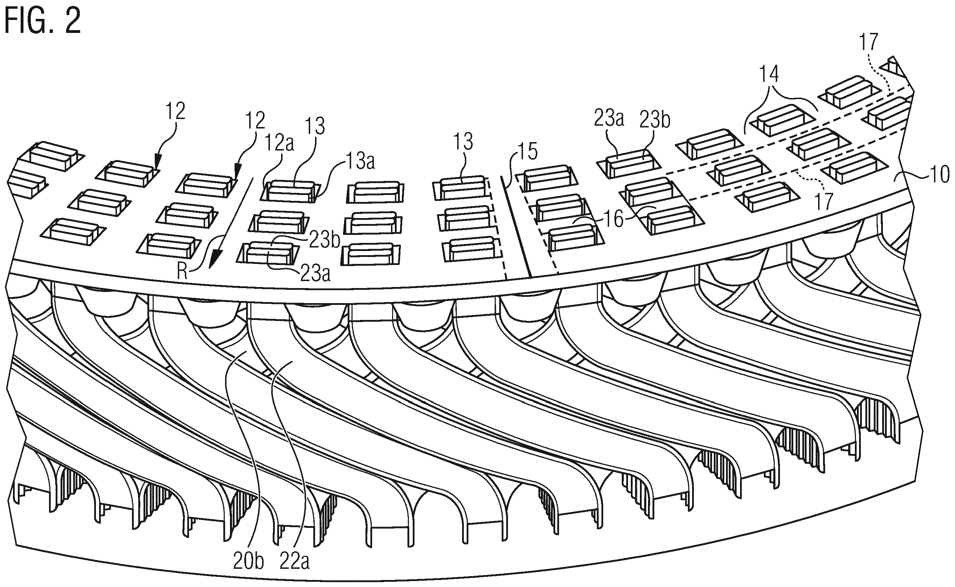

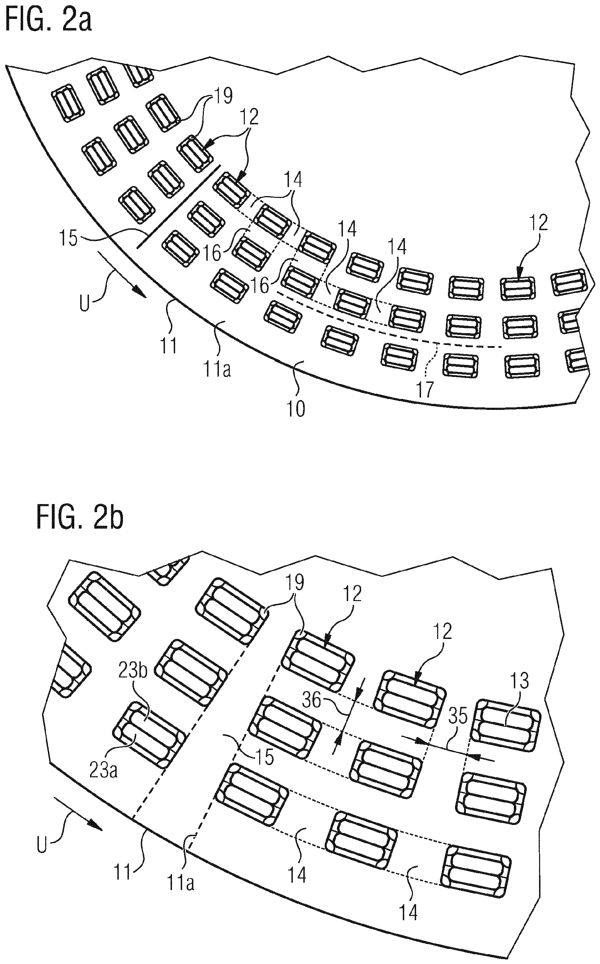

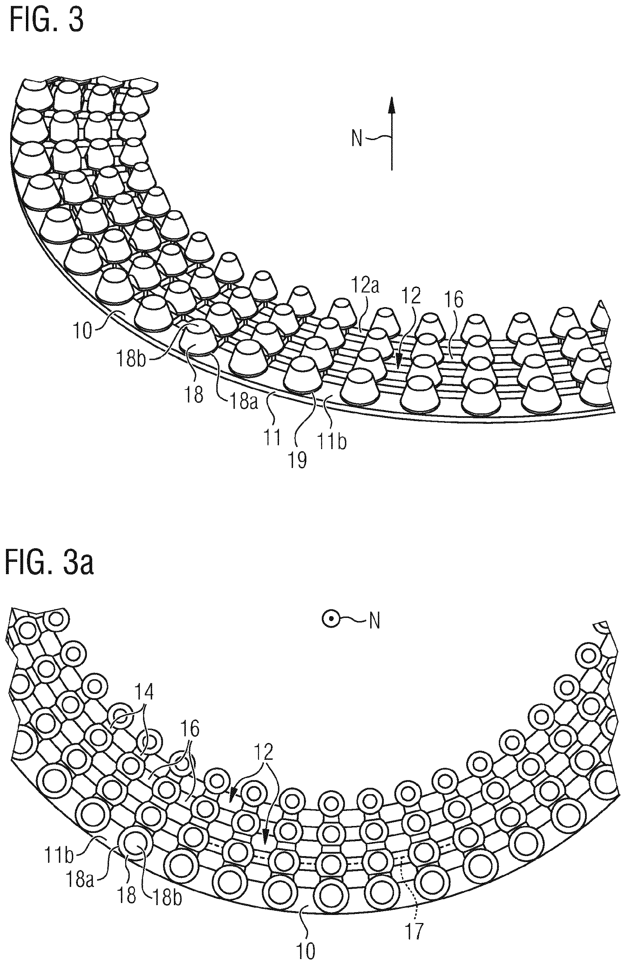

Fig. 2 zeigt einen Ausschnitt der Gesamtanordnung der Hairpins 20 des Stators 30, aufgenommen in rechteckig ausgestaltete Ausnehmungen 12 einer erfindungsgemäßen Abdeckung 10 mit einer vorliegend kreisförmig ausgebildeten Fläche 11. Letztere umfasst eine Oberseite 11a (Fig. 2a, 2b) und eine Unterseite 11b (Fig. 3a, 3b). Alternativ kann sie auch als Freiform oder als Vieleck ausgestaltet sein, z. B. als Quadrat oder Rechteck. Mit anderen Worten, die Abdeckung 10 ist flächig ausgebildet.

Die Anzahl der Ausnehmungen 12 entspricht der Menge von Anordnungen 13 (Paaren an oberen Enden 23 der Hairpins 20). Zudem sind die auf einer Kreisbahn angeordneten Ausnehmungen 12 in der Umfangsrichtung U und die Ausnehmungen 12 zweier benachbarter Kreisbahnen in der Radialrichtung R äquidistant zueinander angeordnet. Dadurch sind Herstellung und Anwendung der Abdeckung 10 ganz besonders einfach realisierbar. Des Weiteren ist ein erster Umfang 12a einer Innenseite jeder Ausnehmung 12 größer als ein zweiter Umfang 13a einer Außenseite einer Anordnung 13.

Die Anordnungen 13 können nach Durchführung des Schweißvorgangs ohne ein Verklemmen oder Verkanten aus den Ausnehmungen entfernt werden. Eine Breite bzw. ein Spalt zwischen der Innenseite 12a jeder Ausnehmung 12 und der Außenseite 13a einer Anordnung 13 beträgt üblicherweise ≤ 0,8 mm. Die Radialstege 15 und die Ringstege 17 sind einstückig ausgebildet. Das ist hinsichtlich der Herstellung, Stabilität und Robustheit der Abdeckung besonders vorteilhaft. Alternativ kann der Radialsteg 15 und/oder der Ringsteg 17 mehrere voneinander beabstandete Abschnitte aufweisen.

Die Abdeckung 10 ist vorteilhafterweise einteilig ausgebildet. Daher sind sowohl ihre Herstellung als auch ihre Anwendung besonders einfach und kostengünstig. Der vergleichsweise simple Aufbau der Abdeckung 10 ermöglicht eine einfache, zuverlässige und reproduzierbare Vorbereitung und Durchführung der Schweißoperation, welche zum Verbinden des oberen Endes 23a des ersten Hairpins 21 mit dem oberen Ende 23b des zweiten Hairpins 21 erforderlich ist.

So kann es vorgesehen sein, dass die Abdeckung 10 lediglich in einer Normalenrichtung N bewegt wird, damit die Anordnungen 13, umfassend die paarweise angeordneten oberen Abschnitte 22a, 22b zweier Hairpins 20a, 20b, in die Ausnehmungen 10 aufgenommen werden. Die Normalenrichtung N verläuft parallel zu der Longitudinalachse des jeweils abzudeckenden und/oder zu bearbeitenden Stators 30. Ausrichten, Spannen und Maskieren der Hairpins 20a, 20b erfolgen zeitgleich in einem Schritt. Zum Ausrichten und Spannen sind Mittel 18 auf der Unterseite 11b der Fläche 11 in einer Radialrichtung R angeordnet. Die zu einem zweiten Ende 18b hin verjüngten Mittel 18 dienen zunächst als Einführhilfen für die paarweise angeordneten oberen Abschnitte 22a, 22b der Hairpins 20a, 20b in die Ausnehmungen 12. Die Hairpins 20a, 20b werden weder irreversibel verformt noch kommt es zu einer Beschädigung ihrer Oberflächen oder ihrer Isolierungen. Zudem werden gegebenenfalls vorhandene Abweichungen innerhalb der Gesamtanordnung der Hairpins 20 des Stators auf besonders einfache und materialschonende Weise ausgeglichen. Ein Anschlag (bzw. ein Ende der Bewegung der Abdeckung) der Mittel 18 erfolgt vorteilhafterweise oberhalb der Biegestellen der Hairpins 20a, 20b. Weil das erste Ende 18a jedes Mittels 18 im vorliegenden Fall mit wenigstens zwei der Ausnehmungen 12 teilweise überlappt, wird ein selbsttätiges Ausrichten, d. h. Zentrieren, und Spannen der Anordnungen 13 innerhalb der Ausnehmungen 12 auf einfache, kostengünstige, zuverlässige und reproduzierbare Weise erreicht. Zugleich erfolgt eine Maskierung der Hairpins 20. Dadurch wird vermieden bzw. verhindert, dass der Stator 30 durch gegebenenfalls während der Schweißoperation anfallende Funken und/oder Metallteilchen beschädigt und damit unbrauchbar wird.

Es kann vorgesehen sein, dass erste Enden 18a wenigstens einiger Mittel 18 mit vier der Ausnehmungen 12 überlappen (mittleren beiden Reihen der Mittel 18).

In Fig. 2a ist eine ausschnittsweise Aufsicht auf diese Gesamtanordnung der Hairpins 20 des Stators 30 gezeigt und in Fig. 2b eine ausschnittsweise Vergrößerung der Aufsicht auf diese Gesamtanordnung. Durch beide Figuren wird veranschaulicht, dass mit der Abdeckung 10, insbesondere aufgrund des Vorhandenseins der Mittel 18, insgesamt eine selbsttätige Zentrierung und eine formschlüssige Spanngenauigkeit erzielt wird. Mithin sind unter Verwendung der Abdeckung 10 Statoren 30, umfassend Hairpins 20, herstellbar, welche sich insbesondere durch eine hochpräzise Verarbeitung hinsichtlich der Ausrichtung der Anordnungen 13 auszeichnen.

Fig. 3 zeigt eine ausschnittsweise perspektivische Ansicht einer Unterseite 11b einer Ausführungsform der erfindungsgemäßen Abdeckung 10. In Fig. 3a ist eine ausschnittsweise Aufsicht auf die Ausführungsform aus Fig. 3 dargestellt. Die Abdeckung 10 kann unter Verwendung eines metallischen Materials und/oder eines keramischen Materials hergestellt sein, je nach Anwendung der Abdeckung und Kostenrahmen für ihre Herstellung. Relativ kostengünstig ist die Fertigung aus einem Blechstahl, insbesondere aus einem handelsüblichen.

In den Fig. 3 und 3a ist die Ausgestaltung der Unterseite 11b der Abdeckung 10 gut erkennbar: Der Radialsteg 15 und der Ringsteg 17 sind jeweils einstückig ausgebildet. Die Mittel 18 sind auf den in der Radialrichtung R verlaufenden Radialstegen 15 angeordnet, und zwar so, dass alle vier Ecken der Ausnehmungen 12 jeweils eine teilweise Überlappung mit dem ersten Ende 18a eines der Mittel 18 aufweisen. Des Weiteren sind sämtliche Mittel 18 als beispielsweise Kegelstümpfe ausgebildet. Eine vergleichbare Anordnung ist unter Verwendung von Halbkugeln als Mittel 18 möglich. Alternativ kann das Mittel 18 z. B. als ein mehrseitiger, insbesondere vier- oder sechsseitiger, Pyramidenstumpf ausgebildet sein. In der vorliegenden Ausführungsform können die Mittel 18 als massiver Körper oder als Hohlkörper ausgebildet sein. Somit können die ersten Enden 18a der Kegelstümpfe vorliegend als kreisförmige Flächen oder ringförmig ausgebildet sein. Unabhängig davon ist eine Oberfläche 19 des ersten Endes 18a jedes Mittels 18 mit der Unterseite 11b der Fläche 11 stoffschlüssig verbunden. Für eine Abdeckung 10 gemäß dieser Ausführungsform werden zunächst die Fläche 11 der Abdeckung 10 und die Mittel 18 gefertigt. Danach wird jedes Mittel 18 mit der Oberfläche 19 des ersten Endes 18a auf der Unterseite 11b der Fläche 11 angeordnet, gefolgt von einem stoffschlüssigen Verbinden der Oberfläche 19 des ersten Endes 18a jedes Mittels 18 mit der Unterseite 11b der Fläche 11. Somit kann die Fertigung der Abdeckung 10 nach Bedarf individuell erfolgen. Die stoffschlüssige Verbindung kann - je nach Art der für die Fläche 11 und die Mittel 18 gewählten Materialien - z. B. durch einen Spezialkleber oder eine Schweißoperation erfolgen. Wie in den Figuren 3 und 3a erkennbar kann die Erstreckung der ersten Enden 18a der Mittel 18 in Umfangsrichtung U größer als eine Breite 35 (in Umfangsrichtung U) der Radialstege 15 an der Position des jeweiligen Mittels sein. Ebenfalls kann die Erstreckung der ersten Enden 18a der Mittel 18 in radialer Richtung R größer als eine Breite 36 (in radialer Richtung R) der Ringstege 17 an der Position des jeweiligen Mittels 18 sein.

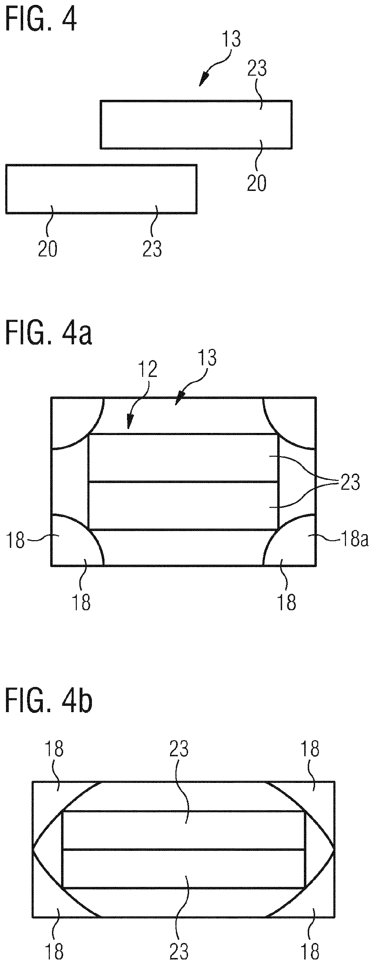

Fig. 4 illustriert ein Paar an oberen Enden 23 von Hairpins bevor sie durch die Erfindungsgemäße Abdeckung bzw. das Erfindungsgemäße Verfahren ausgerichtet wurden. Figur 4a illustriert hingegen die oberen Abschnitte 22 bzw. oberen Enden 23 im in der Ausnehmung 12 aufgenommenen Zustand. Beim "Aufsetzen" bzw. Absenken der Abdeckung 10 auf die Hairpins werden diese entlang den Mitteln 18 geführt und in die Ausnehmungen 12 "gelenkt". In dieser Konfiguration sind sie korrekt positioniert und maskiert.

Im Beispiel von Fig.4a sind die Mittel 18 zur Öffnung 12 hin auswärts gewölbt (oder konvex) ausgebildet. Im Beispiel von Fig.4b sind die Mittel 18 zur Öffnung 12 hin einwärts gewölbt (oder konkav) ausgebildet.

## Patentansprüche

1. Abdeckung (10) zum zeitgleichen Ausrichten und Maskieren von Hairpins (20) eines Stators (30) zur Vorbereitung eines Schweißvorgangs, durch welchen obere Enden (23) der Hairpins (20) verbunden werden, wobei
- die Hairpins (20) zwei Schenkel aufweisen, und die Schenkel (21) einen oberen Abschnitt (22, 22a, 22b) aufweisen, welcher abisoliert ist und ein oberes Ende (23, 23a, 23b) aufweist,
und
- jeweils zwei obere Abschnitte (22) von Schenkeln (21) verschiedener Hairpins (20) paarweise angeordnet sind,
wobei
die Abdeckung (10) umfasst
i) eine Fläche (11) mit einer Oberseite (11a) und einer Unterseite (11b),
ii) Ausnehmungen (12),
- in welche jeweils eine Anordnung (13), umfassend die paarweise angeordneten oberen Abschnitte (22a, 22b) zweier Hairpins (20, 20a, 20b),
aufnehmbar ist
und
welche in einer Umfangsrichtung (U) der Fläche (11) auf konzentrischen Kreisbahnen oder Abschnitten von konzentrischen Kreisbahnen und in radial verlaufenden Reihen nebeneinander angeordnet sind,
wobei
- in der Umfangsrichtung (U) nebeneinander angeordnete Ausnehmungen (12) durch einen Abschnitt (14) eines in einer Radialrichtung (R) verlaufenden Radialstegs (15) beabstandet sind,
- in der Radialrichtung (R) nebeneinander angeordnete Ausnehmungen (12) durch einen Abschnitt (16) eines zwischen den konzentrischen Kreisbahnen verlaufenden Ringstegs (17) beabstandet sind,
und
- eine relative Anordnung der Ausnehmungen (12) einer relativen Endpositionierung entspricht, welche für die paarweise angeordneten oberen Abschnitte (22a, 22b) zweier Hairpins (20a, 20b) vorgesehen ist,
**dadurch gekennzeichnet, dass** die Abdeckung (10) umfasst:
iii) Mittel (18) zum Ausrichten und Spannen der paarweise angeordneten oberen Abschnitte (22a, 22b) zweier Hairpins (20a, 20b),
wobei
- die Mittel (18) auf der Unterseite (11b) der Fläche (11) in der Radialrichtung (R) angeordnet sind,
- jedes Mittel (18) ein der Unterseite (11b) der Fläche (11) zugewandtes erstes Ende (18a) und ein von der Unterseite (11b) der Fläche (11) abgewandtes zweites Ende (18b) aufweist, wobei jedes Mittel (18) zum zweiten Ende (18b) hin verjüngt ist,
und
- das erste Ende (18a) jedes Mittels (18) mit wenigstens einer der Ausnehmungen (12) teilweise überlappt.

2. Abdeckung (10) nach Anspruch 1, wobei die auf einer Kreisbahn angeordneten Ausnehmungen (12) in der Umfangsrichtung (U) und/oder die Ausnehmungen (12) zweier benachbarter Kreisbahnen in der Radialrichtung (R) äquidistant zueinander angeordnet sind.

3. Abdeckung (10) nach Anspruch 1 oder 2, wobei ein erster Umfang einer Innenseite (12a) jeder Ausnehmung (12) größer ist als ein zweiter Umfang einer Außenseite (13a) einer Anordnung (13), umfassend die paarweise angeordneten oberen Abschnitte (22a, 22b) zweier Hairpins (20a, 20b).

4. Abdeckung (10) nach einem der Ansprüche 1 bis 3, wobei der Radialsteg (15) und/oder der Ringsteg (17) einstückig ausgebildet ist.

5. Abdeckung (10) nach einem der Ansprüche 1 bis 4, wobei die Mittel (18) auf den in der Radialrichtung (R) verlaufenden Radialstegen (15) angeordnet sind.

6. Abdeckung (10) nach einem der Ansprüche 1 bis 5, wobei das erste Ende (18a) jedes Mittels (18) mit wenigstens zwei Ausnehmungen (12) teilweise überlappt.

7. Abdeckung (10) nach einem der Ansprüche 1 bis 6, wobei eine Oberfläche (19) des ersten Endes (18a) jedes Mittels (18)
- mit der Unterseite (11b) der Fläche (11) stoffschlüssig verbunden ist.

8. Abdeckung (10) nach einem der Ansprüche 1 bis 7, wobei wenigstens ein Mittel (18) eine Kontur aufweist, welche von einer Pyramide, einem Kegel und/oder einer Kugel ableitbar ist.

9. Abdeckung (10) nach Anspruch 8, wobei wenigstens ein Mittel (18) ein vierseitiger Pyramidenstumpf, ein sechsseitiger Pyramidenstumpf, ein Kegelstumpf oder eine Halbkugel ist.

10. Abdeckung (10) nach einem der Ansprüche 1 bis 9, hergestellt unter Verwendung eines metallischen Materials und/oder eines keramischen Materials.

11. Abdeckung (10) nach einem der Ansprüche 1 bis 10, hergestellt unter Verwendung eines 3D-Druckverfahrens oder eines Spritzgussverfahrens.

12. Abdeckung (10) nach Anspruch 11, wobei das Spritzgussverfahren ein Keramikpulverspritzgussverfahren oder ein Metallpulverspritzgussverfahren ist.

13. Vorrichtung zum zeitgleichen Ausrichten und Maskieren von Hairpins (20) eines Stators (30) zur Vorbereitung eines Schweißvorgangs, durch welchen obere Enden (23) der Hairpins (20) verbunden werden,
wobei
- die Hairpins (20) zwei Schenkel aufweisen, und die Schenkel (21) einen oberen Abschnitt (22, 22a, 22b) aufweisen, welcher abisoliert ist und ein oberes Ende (23, 23a, 23b) aufweist,
und
- jeweils zwei obere Abschnitte (22) von Schenkeln (21) verschiedener Hairpins (20) paarweise angeordnet sind,
umfassend
i) eine Abdeckung (10) gemäß einem der Ansprüche 1 bis 12
und
ii) einen Antrieb zum Bewegen der Abdeckung (10) in einer Normalenrichtung (N), wobei die Normalenrichtung (N) parallel zu einer Longitudinalachse des jeweils abzudeckenden und/oder zu bearbeitenden Stators verläuft.

14. Verfahren zum Verbinden von oberen Enden (23) von Hairpins (20) eines Stators (30) unter Verwendung eines Schweißvorgangs,
wobei
- die Hairpins (20) zwei Schenkel aufweisen, und die Schenkel (21) einen oberen Abschnitt (22, 22a, 22b) aufweisen, welcher abisoliert ist und ein oberes Ende (23, 23a, 23b) aufweist,
und
- jeweils zwei obere Abschnitte (22) von Schenkeln (21) verschiedener Hairpins (20) paarweise angeordnet sind,
umfassend die Schritte:
i) zeitgleiches Ausrichten und Maskieren von Anordnungen (13), welche jeweils paarweise angeordnete obere Abschnitte (22a, 22b) zweier Hairpins (20a, 20b) umfassen,
unter Verwendung einer Abdeckung (10) gemäß einem der Ansprüche 1 bis 12,
wobei in einer Normalenrichtung (N) eine Absenkung der Abdeckung (10) erfolgt, bis zumindest obere Enden (23a, 23b) der paarweise angeordneten oberen Abschnitte (22a, 22b) der Hairpins (20a, 20b) in Ausnehmungen (12) der Abdeckung (10) aufgenommen sind,
ii) Durchführen des Schweißvorgangs,
und
iii) Entfernen der Abdeckung (10) in einer zu der Normalenrichtung (N) entgegengesetzten Richtung.

15. Verfahren nach Anspruch 14, wobei das Ausrichten einen radialen Ausrichtungsschritt und einen tangentialen Ausrichtungsschritt umfasst, und wobei die beiden Ausrichtungsschritte zeitgleich durchgeführt werden.

16. Verfahren nach Anspruch 14 oder 15, wobei die Absenkung der Abdeckung (10) erfolgt, bis zumindest die oberen Enden (23a, 23b) der paarweise angeordneten oberen Abschnitte (22a, 22b) der Hairpins (20a, 20b) durch die Ausnehmungen (12) der Abdeckung (10) hindurchgeführt sind.

17. System, umfassend
i) einen Stator (30),
umfassend Hairpins (20), wobei
- die Hairpins (20) zwei Schenkel aufweisen, und die Schenkel (21) einen oberen Abschnitt (22, 22a, 22b) aufweisen, welcher abisoliert ist und ein oberes Ende (23, 23a, 23b) aufweist,
und
- jeweils zwei obere Abschnitte (22) von Schenkeln (21) verschiedener Hairpins (20) paarweise angeordnet sind,
und
ii) eine Abdeckung (10) gemäß einem der Ansprüche 1 bis 12,
wobei zumindest die oberen Enden (23a, 23b) der paarweise angeordneten oberen Abschnitte (22a, 22b) der Hairpins (20a, 20b) in Ausnehmungen (12) der Abdeckung (10) aufgenommen sind, so dass die jeweils in Ausnehmungen (12) der Abdeckung aufgenommenen Hairpins miteinander verschweißt werden können.

18. Verfahren zum Verbinden von Enden (23) von Wicklungsdrähten (20) eines Stators (30) unter Verwendung eines Schweißvorgangs,
wobei
- die Wicklungsdrähte (20) Schenkel aufweisen, und die Schenkel (21) einen oberen Abschnitt (22, 22a, 22b) aufweisen, welcher abisoliert ist und ein oberes Ende (23, 23a, 23b) aufweist,
und
- jeweils zwei obere Abschnitte (22) von Schenkeln (21) verschiedener Wicklungsdrähte (20) paarweise angeordnet sind,
umfassend die Schritte:
iv) zeitgleiches Ausrichten und Maskieren von Anordnungen (13), welche jeweils paarweise angeordnete obere Abschnitte (22a, 22b) zweier Wicklungsdrähte (20a, 20b) umfassen,
unter Verwendung einer Abdeckung (10) gemäß einem der Ansprüche 1 bis 12,
wobei in einer Normalenrichtung (N) eine Absenkung der Abdeckung (10) erfolgt, bis zumindest obere Enden (23a, 23b) der paarweise angeordneten oberen Abschnitte (22a, 22b) der Wicklungsdrähte (20a, 20b) in Ausnehmungen (12) der Abdeckung (10) aufgenommen sind,
v) Durchführen des Schweißvorgangs,
und
Entfernen der Abdeckung (10) in einer zu der Normalenrichtung (N) entgegengesetzten Richtung.

## Claims

1. Cover (10) for simultaneously aligning and masking hairpins (20) of a stator (30) in preparation for a welding process by which upper ends (23) of the hairpins (20) are joined, wherein
- the hairpins (20) have two legs,
and the legs (21) have an upper portion (22, 22a, 22b) which is stripped and has an upper end (23, 23a, 23b),
and
- in each case two upper portions (22) of legs (21) of different hairpins (20) are arranged in pairs,
wherein
the cover (10) comprises
i) a surface (11) having an upper face (11a) and a lower face (11b),
ii) recesses (12),
- in each of which an assembly (13) comprising the upper portions (22a, 22b) of two hairpins (20, 20a, 20b) arranged in pairs
can be received
and
which are arranged next to each other in a circumferential direction (U) of the surface (11) on concentric circular paths or portions of concentric circular paths and in radially extending rows,
wherein
- recesses (12) arranged next to one another in the circumferential direction (U) are spaced apart by a portion (14) of a radial partition (15) extending in a radial direction (R),
- recesses (12) arranged next to one another in the radial direction (R) are spaced apart by a portion (16) of an annular partition (17) extending between the concentric circular paths,
and
- a relative arrangement of the recesses (12) corresponds to a relative end positioning provided for the upper portions (22a, 22b) of two hairpins (20a, 20b) arranged in pairs,
**characterized in that** the cover (10) comprises
iii) means (18) for aligning and tensioning the upper portions (22a, 22b) of two hairpins (20a, 20b) arranged in pairs,
wherein
- the means (18) are arranged on the lower face (11b) of the surface (11) in the radial direction (R),
- each means (18) has a first end (18a) facing the lower face (11b) of the surface (11) and a second end (18b) facing away from the lower face (11b) of the surface (11),
wherein each means (18) is tapered toward the second end (18b),
and
- the first end (18a) of each means (18) partially overlaps with at least one of the recesses (12).

2. Cover (10) according to claim 1, wherein the recesses (12) arranged on a circular path are arranged equidistant from one another in the circumferential direction (U) and/or the recesses (12) of two adjacent circular paths are arranged equidistant from one another in the radial direction (R).

3. Cover (10) according to claim 1 or 2, wherein a first circumference of an inner face (12a) of each recess (12) is larger than a second circumference of an outer face (13a) of an assembly (13) comprising the upper portions (22a, 22b) of two hairpins (20a, 20b) arranged in pairs.

4. Cover (10) according to any of claims 1 to 3, wherein the radial partition (15) and/or the annular partition (17) is formed in one piece.

5. Cover (10) according to any of claims 1 to 4, wherein the means (18) are arranged on the radial partitions (15) extending in the radial direction (R).

6. Cover (10) according to any of claims 1 to 5, wherein the first end (18a) of each means (18) partially overlaps with at least two recesses (12).

7. Cover (10) according to any of claims 1 to 6, wherein a surface (19) of the first end (18a) of each means (18)
- is integrally bonded to the lower face (11b) of the surface (11).

8. Cover (10) according to any of claims 1 to 7, wherein at least one means (18) has a contour which can be derived from a pyramid, a cone and/or a sphere.

9. Cover (10) according to claim 8, wherein at least one means (18) is a foursided truncated pyramid, a six-sided truncated pyramid, a truncated cone or a hemisphere.

10. Cover (10) according to any of claims 1 to 9, produced using a metal material and/or a ceramic material.

11. Cover (10) according to any of claims 1 to 10, produced using a 3D printing process or an injection molding process.

12. Cover (10) according to claim 11, wherein the injection molding process is a ceramic powder injection molding process or a metal powder injection molding process.

13. Apparatus for simultaneously aligning and masking hairpins (20) of a stator (30) in preparation for a welding process by which upper ends (23) of the hairpins (20) are joined,
wherein
- the hairpins (20) have two legs,
and the legs (21) have an upper portion (22, 22a, 22b) which is stripped and has an upper end (23, 23a, 23b),
and
- in each case two upper portions (22) of legs (21) of different hairpins (20) are arranged in pairs,
comprising
i) a cover (10) according to any of claims 1 to 12
and
ii) a drive for moving the cover (10) in a normal direction (N), wherein the normal direction (N) runs in parallel with a longitudinal axis of the stator to be covered and/or machined in each case.

14. Method for joining upper ends (23) of hairpins (20) of a stator (30) using a welding process,
wherein
- the hairpins (20) have two legs,
and the legs (21) have an upper portion (22, 22a, 22b) which is stripped and has an upper end (23, 23a, 23b),
and
- in each case two upper portions (22) of legs (21) of different hairpins (20) are arranged in pairs,
comprising the following steps:
i) simultaneously aligning and masking assemblies (13), each comprising upper portions (22a, 22b) of two hairpins (20a, 20b) arranged in pairs,
using a cover (10) according to any of claims 1 to 12,
wherein the cover (10) is lowered in a normal direction (N) until at least upper ends (23a, 23b) of the upper portions (22a, 22b) of the hairpins (20a, 20b) arranged in pairs are received in recesses (12) of the cover (10),
ii) carrying out the welding process,
and
iii) removing the cover (10) in a direction opposite to the normal direction (N).

15. Method according to claim 14, wherein the alignment comprises a radial alignment step and a tangential alignment step, and wherein the two alignment steps are carried out simultaneously.

16. Method according to claim 14 or 15, wherein the lowering of the cover (10) takes place until at least the upper ends (23a, 23b) of the upper portions (22a, 22b) of the hairpins (20a, 20b) arranged in pairs have passed through the recesses (12) of the cover (10).

17. System, comprising
i) a stator (30),
comprising hairpins (20), wherein
- the hairpins (20) have two legs,
and the legs (21) have an upper portion (22, 22a, 22b) which is stripped and has an upper end (23, 23a, 23b),
and
- in each case two upper portions (22) of legs (21) of different hairpins (20) are arranged in pairs,
and
ii) a cover (10) according to any of claims 1 to 12,
wherein at least the upper ends (23a, 23b) of the upper portions (22a, 22b) of the hairpins (20a, 20b) arranged in pairs are received in recesses (12) of the cover (10), so that the hairpins received in recesses (12) of the cover can be welded together.

18. Method for joining ends (23) of winding wires (20) of a stator (30) using a welding process,
wherein
- the winding wires (20) have legs,
and the legs (21) have an upper portion (22, 22a, 22b) which is stripped and has an upper end (23, 23a, 23b),
and
- in each case two upper portions (22) of legs (21) of different winding wires (20) are arranged in pairs,
comprising the following steps:
iv) simultaneously aligning and masking assemblies (13), each comprising upper portions (22a, 22b) of two winding wires (20a, 20b) arranged in pairs,
using a cover (10) according to any of claims 1 to 12,
wherein the cover (10) is lowered in a normal direction (N) until at least upper ends (23a, 23b) of the upper portions (22a, 22b) of the winding wires (20a, 20b) arranged in pairs are received in recesses (12) of the cover (10),
v) carrying out the welding process,
and
removing the cover (10) in a direction opposite to the normal direction (N).

## Revendications

1. Couvercle (10) pour aligner et masquer simultanément des épingles à cheveux (20) d'un stator (30) pour préparer une opération de soudage par laquelle les extrémités supérieures (23) des épingles à cheveux (20) sont reliées, dans lequel
- les épingles à cheveux (20) présentent deux branches, et les branches (21) présentent une partie supérieure (22, 22a, 22b), laquelle est dénudée et présente une extrémité supérieure (23, 23a, 23b), et
- deux parties supérieures (22) de branches (21) de différentes épingles à cheveux (20) sont respectivement disposées par paires, dans lequel le couvercle (10) comprend
i) une surface (11) avec une face supérieure (11a) et une face inférieure (11b),
ii) des évidements (12),
- dans lesquels peut être reçu respectivement un ensemble (13), comprenant les parties supérieures (22a, 22b), disposées par paires, de deux épingles à cheveux (20, 20a, 20b), et lesquels sont disposés les uns à côté des autres dans une direction périphérique (U) de la surface (11) sur des trajectoires circulaires concentriques ou des parties de trajectoires circulaires concentriques et en rangées s'étendant radialement, dans lequel
- des évidements (12) disposés les uns à côté des autres dans la direction circonférentielle (U) sont espacés par une partie (14) d'une barrette radiale (15) s'étendant dans une direction radiale (R),
- des évidements (12) disposés les uns à côté des autres dans la direction radiale (R) sont espacés par une partie (16) d'une barrette annulaire (17) s'étendant entre les trajectoires circulaires concentriques, et
- une disposition relative des évidements (12) correspond à un positionnement final relatif, lequel est prévu pour les parties supérieures (22a, 22b) disposées par paires de deux épingles à cheveux (20a, 20b), **caractérisé en ce que** le couvercle (10) comprend
iii) des moyens (18) pour aligner et tendre les parties supérieures (22a, 22b), disposées par paires, de deux épingles à cheveux (20a, 20b), dans lesquels
- les moyens (18) sont disposés sur la face inférieure (11b) de la surface (11) dans la direction radiale (R),
- chaque moyen (18) présente une première extrémité (18a) tournée vers la face inférieure (11b) de la surface (11) et une deuxième extrémité (18b) opposée à la face inférieure (11b) de la surface (11), dans lequel chaque moyen (18) est effilé en direction de la deuxième extrémité (18b), et
- la première extrémité (18a) de chaque moyen (18) chevauche partiellement au moins l'un des évidements (12).

2. Couvercle (10) selon la revendication 1, dans lequel les évidements (12) disposés sur une trajectoire circulaire sont équidistants les uns des autres dans la direction circonférentielle (U) et/ou les évidements (12) de deux trajectoires circulaires voisines sont équidistants les uns des autres dans la direction radiale (R).

3. Couvercle (10) selon la revendication 1 ou 2, dans lequel une première circonférence d'une face intérieure (12a) de chaque évidement (12) est plus grande qu'une deuxième circonférence d'une face extérieure (13a) d'un ensemble (13) comprenant les parties supérieures (22a, 22b) disposées par paires de deux épingles à cheveux (20a, 20b).

4. Couvercle (10) selon l'une quelconque des revendications 1 à 3, dans laquelle la barrette radiale (15) et/ou la barrette annulaire (17) sont réalisées d'une seule pièce.

5. Couvercle (10) selon l'une quelconque des revendications 1 à 4, dans lequel les moyens (18) sont disposés sur les barrettes radiales (15) s'étendant dans la direction radiale (R).

6. Couvercle (10) selon l'une quelconque des revendications 1 à 5, dans laquelle la première extrémité (18a) de chaque moyen (18) est partiellement chevauchée avec au moins deux évidements (12).

7. Couvercle (10) selon l'une quelconque des revendications 1 à 6, dans laquelle une surface (19) de la première extrémité (18a) de chaque moyen (18)
- est reliée à la face inférieure (11b) de la surface (11) par une liaison de matière.

8. Couvercle (10) selon l'une quelconque des revendications 1 à 7, dans lequel au moins un moyen (18) présente un contour, lequel peut être dérivé d'une pyramide, d'un cône et/ou d'une sphère.

9. Couvercle (10) selon la revendication 8, dans lequel au moins un moyen (18) est une pyramide tronquée à quatre côtés, une pyramide tronquée à six côtés, un cône tronqué ou une demi-sphère.

10. Couvercle (10) selon l'une quelconque des revendications 1 à 9, fabriqué au moyen d'un matériau métallique et/ou d'un matériau céramique.

11. Couvercle (10) selon l'une quelconque des revendications 1 à 10, fabriqué au moyen d'un procédé d'impression 3D ou d'un procédé de moulage par injection.

12. Couvercle (10) selon la revendication 11, dans lequel le procédé de moulage par injection est un procédé de moulage par injection de poudre céramique ou un procédé de moulage par injection de poudre métallique.

13. Dispositif pour aligner et masquer simultanément des épingles à cheveux (20) d'un stator (30) pour préparer une opération de soudage par laquelle les extrémités supérieures (23) des épingles à cheveux (20) sont reliées, dans lequel
- "les épingles à cheveux (20) présentent deux branches, et les branches (21) présentent une partie supérieure (22, 22a, 22b), laquelle est dénudée et présente une extrémité supérieure (23, 23a, 23b), et
- deux parties supérieures (22) de branches (21) de différentes épingles à cheveux (20) sont respectivement disposées par paires, comprenant
i) un couvercle (10) selon l'une quelconque des revendications 1 à 12, et
ii) un entraînement pour déplacer le couvercle (10) dans une direction normale (N), dans lequel la direction normale (N) s'étend parallèlement à un axe longitudinal du stator respectivement à recouvrir et/ou à usiner.

14. Procédé pour relier les extrémités supérieures (23) d'épingles à cheveux (20) d'un stator (30) au moyen d'une opération de soudage, dans lequel
- "les épingles à cheveux (20) présentent deux branches, et les branches (21) présentent une partie supérieure (22, 22a, 22b), laquelle est dénudée et présente une extrémité supérieure (23, 23a, 23b), et
- deux parties supérieures (22) de branches (21) de différentes épingles à cheveux (20) sont respectivement disposées par paires, comprenant les étapes de :
i) alignement et masquage simultanés d'ensembles (13), lesquels comprennent des parties supérieures (22a, 22b), respectivement disposées par paires, de deux épingles à cheveux (20a, 20b), au moyen d'un couvercle (10) selon l'une quelconque des revendications 1 à 12, dans lequel un abaissement du couvercle (10) est effectué dans une direction normale (N) jusqu'à ce qu'au moins les extrémités supérieures (23a, 23b) des parties supérieures (22a, 22b) disposées par paires des épingles à cheveux (20a, 20b) soient reçues dans des évidements (12) du couvercle (10),
ii) mise en oeuvre du processus de soudage, et
iii) retrait du couvercle (10) dans une direction opposée à la direction normale (N).

15. Procédé selon la revendication 14, dans lequel l'alignement comprend une étape d'alignement radial et une étape d'alignement tangentiel, et dans lequel les deux étapes d'alignement sont mises en oeuvre simultanément.

16. Procédé selon la revendication 14 ou 15, dans lequel l'abaissement du couvercle (10) est effectué jusqu'à ce qu'au moins les extrémités supérieures (23a, 23b) des parties supérieures (22a, 22b) des épingles à cheveux (20a, 20b) disposées par paires soient guidées à travers les évidements (12) du couvercle (10).

17. Système, comprenant
i) un stator (30),
comprenant des épingles à cheveux (20), dans lequel
- les épingles à cheveux (20) présentent deux branches, et les branches (21) présentent une partie supérieure (22, 22a, 22b), laquelle est dénudée et présente une extrémité supérieure (23, 23a, 23b), et
- deux parties supérieures (22) de branches (21) de différentes épingles à cheveux (20) sont respectivement disposées par paires, et
ii) un couvercle (10) selon l'une quelconque des revendications 1 à 12, dans lequel au moins les extrémités supérieures (23a, 23b) des parties supérieures (22a, 22b) des épingles à cheveux (20a, 20b) disposées par paires sont reçues dans des évidements (12) du couvercle (10), de sorte que les épingles à cheveux reçues respectivement dans des évidements (12) du couvercle peuvent être soudées entre elles.

18. Procédé pour relier les extrémités (23) de fils d'enroulement (20) d'un stator (30) au moyen d'une opération de soudage, dans lequel
- les fils d'enroulement (20) présentent des branches, et les branches (21) présentent une partie supérieure (22, 22a, 22b), laquelle est dénudée et présente une extrémité supérieure (23, 23a, 23b), et
- deux parties supérieures (22) de branches (21) de différents fils d'enroulement (20) sont respectivement disposées par paires, comprenant les étapes de :
iv) alignement et masquage simultanés d'ensembles (13), lesquels comprennent des parties supérieures (22a, 22b) disposées respectivement par paires de deux fils d'enroulement (20a, 20b), au moyen d'un couvercle (10) selon l'une quelconque des revendications 1 à 12, dans lequel un abaissement du couvercle (10) est effectué dans une direction normale (N) jusqu'à ce qu'au moins les extrémités supérieures (23a, 23b) des parties supérieures (22a, 22b) des fils d'enroulement (20a, 20b) disposées par paires soient reçues dans des évidements (12) du couvercle (10),
v) mise en oeuvre de l'opération de soudage, et retrait du couvercle (10) dans une direction opposée à la direction normale (N).
